# EUROPÄISCHE PATENTSCHRIFT

(11) **EP 2 208 919 B1**
(45) Veröffentlichungstag und Bekanntmachung des Hinweises auf die Patenterteilung: **09.11.2011**
(21) Anmeldenummer: 09075030.8
(22) Anmeldetag: 17.01.2009
(51) Int. Cl.: F16L 37/23, F16L 37/34, F16L 55/10

(54) **Schnelltrennkupplung zum dichtenden Verbinden von flüssige oder gasförmige Medien transportierenden Leitungen**
Quick release coupling for sealed connection of supply channels transporting fluid or gaseous media
Raccord de coupure rapide destiné à la liaison étanche de conduites transportant des milieux liquides ou gazeux

(43) Veröffentlichungstag der Anmeldung: 21.07.2010
(73) Patentinhaber: Roman Seliger GmbH, 22848 Norderstedt (DE)
(72) Erfinder: Buhk, Birger, 21039 Hamburg (DE); Hamkens, Hauke-Peter, 25832 Tönning (DE); Brandt, Holger, 22869 Schenefeld (DE); Schwarz, Eugen, 21033 Hamburg (DE); Adam, Michael, 24589 Nortorf (DE)
(74) Vertreter: Wenzel & Kalkoff

(56) Entgegenhaltungen:
- EP-A1- 0 154 934
- DE-A1- 3 313 257
- DE-A1- 10 304 151
- DE-A1-102007 011 320
- US-A- 5 209 262

## Beschreibung

Die Erfindung betrifft eine Schnelltrennkupplung zum dichtenden Verbinden von flüssige oder gasförmig Medien transportierenden Leitungen.

Die Schnelltrennkupplung umfasst (a)) zwei trennbar verbundene, einen Medium-Strömungsweg in der Kupplung herstellende, sich jeweils zwischen Kupplungsseite und Leitungsseite in gerader Kupplungsachse axial erstreckende Kupplungsteile mit Mutterteil und Vaterteil, (b)) eine die beiden Kupplungsteile in der trennbaren Kupplungsverbindung haltende Verriegelungseinrichtung und (c)) ein Schnelltrennmittel, umfassend die Verriegelungseinrichtung und eine damit zusammenwirkende Löseeinrichtung zum Trennen der beiden Kupplungsteile an einer Trennverriegelungsstelle.

(c1)) Die Verriegelungseinrichtung, die einen an dem einen (ersten) Kupplungsteil vorgesehenen Käfigkörper, einen an dem anderen (zweiten) Kupplungsteil vorgesehenen Arretierkörper, einen Haltekörper sowie in dem Käfigkörper zwischen Arretierposition und Löseposition radial verlagerbare Verriegelungselemente umfasst, ist derart eingerichtet, dass die Verriegelungselemente zum Verriegeln der Kupplungsverbindung an der Trennverriegelungsstelle im Arretiersitz in den Arretierkörper einfassen und mittels des Haltekörpers in dieser Arretierposition gehalten werden; (c2)) die Löseeinrichtung, die eine Halteeinrichtung, den Haltekörper und Ausweichraum umfasst, ist derart eingerichtet, dass die Halteeinrichtung die Verriegelung sichert und entsichert, wobei sie die Verriegelungselemente zum Entsichern gegenüber dem Haltekörper freikommen lässt, die dadurch, in den Ausweichraum ausweichend, zum Entriegeln der Kupplungsverbindung in ihre Löseposition gelangen; (d)) zwischen den Verriegelungselementen und dem Haltekörper ist ein intermediäres Haltemittel derart angeordnet und eingerichtet, dass der Haltekörper die Verriegelungselemente mittelbar mit dem intermediären Haltemittel in der Arretierposition hält, wobei das intermediäre Haltemittel wenigstens im Wesentlichen nur radial gegenüber den Verriegelungselementen ausweichlich ist und der Haltekörper zum Ausüben der mittelbaren Haltefunktion einen das intermediäre Haltemittel in Axialrichtung einfassenden Halterand aufweist, der das intermediäre Haltemittel zum Verriegeln flächig einfasst und zum Lösen der Verriegelung mittels der Halteeinrichtung freigibt.

Eine gattungsgemäße Trennkupplung ist aus DE 10 2007 011320 A1 bekannt. Eine als intermediäres Haltemittel direkt an Sperrkugeln angreifende gummielastische Haltemanschette bildet ein Federmittel, das bei zwischen Kupplungsteilen wirkender Zugkraft flächenelastisch verformt wird und besonderem Verschleiß unterliegt, wobei Funktion und Lebensdauer der Haltemanschette unter Druckverformung sowie auch unter Temperatureinfluss beeinträchtigt sind. Übertragung von insbesondere großem Sperrdruck und Betrieb mit zuverlässigen Funktionseigenschaften bleiben unbefriedigend.

Eine besondere Schnelltrennkupplung mit Überlastsicherung ist zum Beispiel aus EP 0 154 934 A1 bekannt. Ein Sperrkugeln als Verriegelungselemente haltender Käfig ist, entgegen Federbelastung in Trennrichtung der Kupplungsteile, verlagerbar bis zur radialen Deckung mit einem an verschieblicher Haltehülse vorgesehenen Ausweichraum. Die Sperrkugeln stützen sich an der Haltehülse ab. Aufgrund punktueller Anlage der Sperrkugeln insbesondere an der verschieblichen Haltehülse entsteht erheblicher spezifischer Flächendruck. Dies führt zu Verschleiß und damit zu unerwünschter Änderung von Haltekraft. Übertragbarer Sperrdruck ist reduziert. Um die Sperrkugeln mit dem Ausweichraum zur Deckung zu bringen, ist axialer Mindesthub erforderlich, der wenigstens dem Kugeldurchmesser entspricht. Daraus resultiert ein relativ großer Auslösebereich der Lösekraft. - Eine andere Hochdruck-Nottrennkupplung ist aus DE 103 04 151 A1 bekannt. Dort werden Verriegelungselemente mit kreisringabschnittförmiger Gestalt offenbart. Es soll Formschluss mit reduzierter Flächenpressung erreicht werden. Die Gestalt der Verriegelungselemente muss besonders angepasst werden. Eine axial verschiebliche Haltehülse liegt an den Verriegelungselementen an. Der Auslösebereich zur Kupplungstrennung bleibt unerwünscht unbestimmt.

Danach liegen der Erfindung die Ziele zugrunde, eine Schnelltrennkupplung mit einem Schnelltrennmittel zu schaffen, dessen Löseeinrichtung hinsichtlich reduzierten Verschleißes, Übertragung von Sperrdruck und definierter Einstellung der Auslösekraft verbessert ist. Auch soll die Schnelltrennkupplung besonders funktions- und betriebssicher sein. Sie soll einfach bauen und kostengünstig herstellbar sein.

Die Ziele der Erfindung werden in Verbindung mit den Merkmalen der eingangs genannten Schnelltrennkupplung dadurch erreicht, dass das intermediäre Haltemittel auf den Verriegelungselementen aufsitzende Verriegelungsschuhe umfasst, die zusammen mit den Verriegelungselementen in den Ausweichraum radial ausweichend angeordnet und ausgebildet sind und jeweils mit einer Sitzfläche ausgebildet sind, die wenigstens eine Linienanlage an den Verriegelungselementen herstellt, und dass die Verriegelungsschuhe unter radial gerichteter elastischer Rückstellkraft gegen die Verriegelungselemente anliegen, wobei die Verriegelungselemente in ihrem Arretiersitz axiale Relativbewegung zwischen dem Käfigkörper und dem Arretierkörper sperren.

Man erreicht eine besonders einfache Gestaltung zum freien radialen Entweichen der Verriegelungselemente in den Ausweichraum. Mittels elastischer Rückstellung werden die Verriegelungselemente in der Phase des freien Ausweichens und in anschließender Bereitschaftsstellung zur Kupplung der Kupplungsteile unverlierbar gehalten. Die erfindungsgemäß vorgesehenen, das intermediären Haltemittel bildenden Verriegelungsschuhe zeichnen sich dadurch aus, dass sie kein eigenständig wirkendes Halteelement bilden und in fester, das heißt axial unverschieblicher Anordnung an den Verriegelungselementen anliegen. Die eigentliche Gegenhaltung vollzieht der Haltekörper, der das nur als Haltvermittler wirkende intermediäre Haltemittel radial gegen die Verriegelungselemente drängt. Man erreicht, dass zwischen dem unmittelbar auf die Verriegelungselemente einwirkenden intermediären Haltemittel und den Verriegelungskörpern Reibfläche, insbesondere punktuelle Reibfläche zum Freigeben der Verriegelungselemente entfällt. Verschleiß und Druckmarken an den Verriegelungselementen werden vermieden. Während das intermediäre Haltemittel nur in statischer Verbindung an den Verriegelungselementen anliegt, weist der Verriegelungskörper einen gegen das intermediäre Haltemittel arbeitenden Halterand auf, der das intermediäre Haltemittel zum Andrücken gegen die Verriegelungselemente im Wesentlichen unabhängig von deren Dimensionierung und Gestaltung nieder hält bzw. frei gibt. Aufgrund dieser Maßnahme lassen sich die Verriegelungselemente weitgehend verschleißarm betreiben und, was von besonderer Bedeutung ist, mit dem Halterand des Haltekörpers definiert von dem intermediären Haltemittel trennen. Die Lösekraft zum Trennen des Halterands von dem intermediären Haltemittel, nämlich zum Überwinden vorgegebener Haltekraft, lässt sich weitgehend in Übereinstimmung mit der Haltekraft bestimmen und mit hoher Wiederholgenauigkeit einstellen. Man erreicht auch bei geringerer gewünschter Haltekraft, die zum Beispiel für die Schnellkupplung in einer Betankungsleitung mit 200 kg vorgegeben wird, eine weitgehend genaue Fokussierung zum Auslösen, also zum Entriegeln der Verbindung. Das heißt, dass die axiale Auslösekraft die vorgegebene Haltekraft mit geringster Toleranz überwindet. Zum Beispiel wird bei einer vorgegebenen Abreißkraft von 200 kg zwischen den Kupplungsteilen ein zulässiger Toleranzbereich von ± 3 kg zuverlässig sichergestellt und unterschritten. Das erfindungsgemäße Schnelltrennmittel der Schnelltrennkupplung weist einfache Baustruktur mit entsprechend einfachen Bauelementen auf. Entsprechend vorteilhaft lässt sich das Schnelltrennmittel an Schnelltrennkupplungen unterschiedlichster Kupplungs- und/oder Ventilmechanismen anbringen. Im Ganzen ist erfindungsgemäß eine Schnelltrennkupplung erreicht, die unter Vermeidung von Verschleiß besonders funktionstüchtig und betriebszuverlässig ist, die Auslösekraft zum Entriegeln der Kupplungsverbindung besonders fokussiert und die mit einfacher Bauweise des Schnelltrennmittels kostengünstig herstellbar ist.

Eine besondere Gestaltung der Erfindung besteht darin, der Haltekörper und das intermediäre Haltemittel zum Lösen der Verriegelung mittels der Halteeinrichtung relativ zueinander derart axial verlagerbar angeordnet sind, dass das intermediäre Haltemittel durch die axiale Verlagerung mit axialem Freigabemaß, das durch den Halterand bestimmt ist, von dem Haltekörper freikommt und dadurch zusammen mit den Verriegelungselementen in den Ausweichraum radial entweicht. Das Freigabemaß bleibt klein und erlaubt eine genaue Auslösebestimmung. Insbesondere wird die Toleranz dadurch besonders klein gehalten bzw. die Auslösekraft reproduzierbar dadurch fokussiert, dass das intermediäre Haltemittel von dem Halterand des Haltekörpers nur mit einem axialen Freigabemaß flächig eingefasst wird, das kleiner als die axiale Sitzdimension eines Sitzes ist, in dem das intermediäre Haltemittel auf den Verriegelungselementen aufsitzt, wobei vorzugsweise das axiale Freigabemaß kleiner als die Hälfte der axialen Sitzdimension ist.

Eine besondere Gestaltung der Erfindung besteht darin, dass die Halteeinrichtung eine selbsttätige Auslöseeinrichtung umfasst, die eine zwischen das erste Kupplungsteil und den Käfigkörper geschaltete, ein selbsttätiges Entriegeln bewirkende Kraftquelle zur Nottrennung aufweist, die mit von dieser erzeugter, vorgegebener Haltekraft derart eingerichtet ist, dass die axiale Freigabe-Verlagerung mit dem durch den Halterand bestimmten Freigabemaß dann und nur dann stattfindet, wenn die vorgegebene Haltekraft durch eine dieser entgegengerichteten, zwischen den Kupplungsteilen auftretenden Auslösekraft in Korrelation mit dem Freigabemaß überwunden wird. Zweckmäßig wird die Kraftquelle durch einen Federspeicher einstellbarer Federkraft gebildet.

Nach einer weiteren erfindungsgemäßen Ausgestaltung umfasst die Auslöseeinrichtung eine handbetätigbare Auslöseeinrichtung, die eine manuell betätigbare, an einem Gehäusekörper der Auslöseeinrichtung gelagerte Kraftquelle aufweist, gegen deren Kraft der Haltekörper, versehen mit einer Handhabe, an dem Gehäusekörper axial schiebebewegbar zur Freigabe des intermediären Haltemittels gelagert ist. Die handbetätigbare Auslöseeinrichtung, die auch allein vorgesehen werden kann, ist besonders vorteilhaft in Verbindung mit der selbsttätigen Auslöseeinrichtung. Sie wird dann genutzt, um die beiden Kupplungsteile durch besonders einfache Handhabung miteinander zu verriegeln bzw. zu entriegeln.

Eine besondere Gestaltung der erfindungsgemäßen Schnelltrennkupplung besteht darin, dass die beiden Kupplungsteile derart ausgebildet und eingerichtet sind, dass die Trennverriegelungsstelle im Zustand der verriegelten Kupplungsverbindung von aus Mediumfluss im Strömungsweg der Kupplung resultierenden Axialkräften frei ist, wobei das intermediäre Haltemittel von dem Halterand des Verriegelungskörpers mit einem axialen Freigabemaß eingefasst ist, dessen Größe von den genannten resultierenden Axialkräften unbeeinflusst ist. Man erreicht, dass die Haltekraft bzw. deren Einstellung ohne Einfluss des Druckes des durch die verbundene Kupplung fließenden Mediums bleibt.

Vorteilhaft kann zwischen den Verriegelungsschuhen und den Verriegelungselementen eine federelastische Schnappverbindung ausgebildet werden. Eine solche Schnappverbindung ist derart eingerichtet, dass die Verriegelungselemente in die Verriegelungsschuhe federelastisch einschnappen, wenn zum Kuppeln der Kupplungsteile die Verriegelungsverbindung zwischen dem Arretierkörper und dem Käfigkörper hergestellt wird, und zwar noch bevor der Haltekörper die Verriegelungsschuhe in Position hält.

Gemäß einer bevorzugten Ausgestaltung weist das intermediäre Haltemittel sich axial erstreckende Lamellen auf, die jeweils an einem Fußende an dem Käfigkörper festgelegt und radial ausweichlich angelenkt sind und am gegenüberliegenden Kopfende wenigstens einen auf wenigstens einem zugeordneten Verriegelungselement aufsitzenden Verriegelungsschuh aufweisen, der, vorzugsweise unter federelastischer Lamellen-Anlenkung, zusammen mit dem wenigstens einen Verriegelungselement in den Ausweichraum radial ausweichend ausgebildet ist. Die Lamellen werden zweckmäßig durch eine an dem Käfigkörper angebrachte Lamellenhülse gebildet. Die Lamellen können federelastisch angelenkt und/oder selbst aus federelastischem Material gebildet sein. Die Länge der Lamellen kann genutzt werden, um Federelastizität, die bei axial längeren Lamellen weicher ist, zu bestimmen.

Vorzugsweise werden die Verriegelungselemente durch Kugeln gebildet. Diese stehen für besonders einfache und kostengünstige Herstellung zur Verfügung. Aufgrund der erfindungsgemäßen Maßnahmen werden die Kugeln nicht gedreht und statisch gehalten, so dass andernfalls entstehender Verschleiß besonders wirksam vermieden ist. Die Kugeln werden auch, anders als bekannte aus- und einrückbare Formschluss-Verriegelungselemente, in der Verriegelungseinfassung besonders exakt gehalten, und zwar insbesondere in den Phasen des Entriegelns und des Verriegelns.

Eine bevorzugte Gestaltung der erfindungsgemäBen Schnelltrennkupplung besteht darin, dass die Kupplungsteile Ventilmittel umfassen, die derart eingerichtet sind, dass sie an einer Trenn-Mediumübergangsstelle gedichtet aneinandergrenzende Anschluss-Durchströmungsöffnungen im Kupplungsverbindungszustand öffnen bzw. im Kupplungstrennzustand schließen, wobei die Ventilmittel Ventil-Antriebsmittel und damit beaufschlagte Schließkörper umfassen, die im Kupplungsverbindungszustand mit konstant gehaltener axialer Kraft gegeneinander arbeiten und Bestandteile eines Schnelltrennmittels zur Nottrennung derart bilden, dass die Kupplungsteile beim Entriegeln der Kupplungsverbindung selbsttätig auseinander treiben, wobei die konstant gehaltene axiale Kraft zusammen mit auf die Kupplungsteile über gekuppelte Leitungen ausgeübter axialer Zugkraft an der Trennverriegelungsstelle zur Nottrennung zu überwindende Haltekraft einer selbsttätigen Auslöseeinrichtung der Löseeinrichtung bestimmt. Solche Schnelltrennkupplungen mit selbsttätigen, gegeneinander arbeitenden Ventilen bewirken beim Überschreiten einer festgelegten Trennkraft (Auslöse-/Abreißkraft) eine Trennung der Kupplungsteile und schließen die Trennmediumübergangsstelle beidseitig selbsttätig dichtend ab. Die Kupplungen müssen nach besonderen, in technischen Regeln festgelegten Vorschriften besonders funktions- und betriebssicher arbeiten. Die Druckkraft zwischen den Schließkörpern im Kupplungsverbindungszustand wird konstant gehalten, da andernfalls kritische, zur Nottrennung unbestimmte Verhältnisse entstehen, wenn die Kupplung unter hohem Mediumdruck steht. Als hoher Druck ist bereits ein Innendruck von 10 bar und auch weniger anzusehen. Zum Beispiel tritt ein Druck in dieser Größenordnung in Betankungsschläuchen auf, die an fliegendes Fluggerät angekuppelt sind. Bei dem genannten Druck muss zum Beispiel eine Abreißkraft von 200 kg mit einer Toleranz von ± 3 kg sichergestellt sein.

In besonderer Gestaltung wird die im Kupplungsverbindungszustand zwischen den gegeneinander arbeitenden Ventil-Schließkörpern wirkende axiale Kraft dadurch konstant gehalten, dass an der Trenn-Mediumübergangsstelle durch Strömung im Medium-Strömungsweg wirkende axiale Aktions- und Reaktionskräfte neutralisiert sind und dass sämtliche Elemente der Ventilmittel im Verbindungszustand der Kupplung gänzlich außerhalb des Medium-Strömungswegs in Abdichtung gegenüber diesem vollständig frei von Durchflussmedium angeordnet sind.

Unteransprüche sind auf die genannten und noch andere zweckmäßig und vorteilhafte Ausgestaltungen der Erfindung gerichtet. Besonders zweckmäßige und vorteilhafte Ausführungsformen und -möglichkeiten der Erfindung werden anhand der folgenden Beschreibung der in der schematischen Zeichnung dargestellten Ausführungsbeispiele beschrieben. Es zeigen
- Fig. 1: in mittigem Längsquerschnitt ein Ausfiihrungsbeispiel ei- ner erfindungsgemäße Schnelltrennkupplung im verriegel- ten, zur Nottrennung bereiten Verbindungszustand der Kupplungsteile,
- Fig. 2: einen Ausschnitt aus Fig. 1 zur vergrößerten Darstellung eines erfindungsgemäßen Schnelltrennmittels,
- Fig. 3 und 4: in konzentrischer Anordnung Arretierkörper, intermediä- res Haltemittel und Haltekörper der Schnelltrennkupplung nach Fig. 1, und zwar im Verriegelungszustand mit verrie- gelnden Kugeln (Fig. 3) sowie in der Phase des Trennens mit Kugeln in Löseposition.

Eine erfindungsgemäße Schnelltrennkupplung 1 umfasst ein ein Mutterteil 21 bildendes Kupplungsteil 2 und ein ein Vaterteil 31 aufweisendes Kupplungsteil 3. Die Kupplungsteile 2, 3 erstrecken sich in gerader Kupplungsmittenachse 10. Die vorstehend und im Folgenden verwendete Angabe "axial" bezieht sich auf mit der Achse 10 gemeinsame Richtungen bzw. auf mit der Achse 10 achsparallele Richtungen.

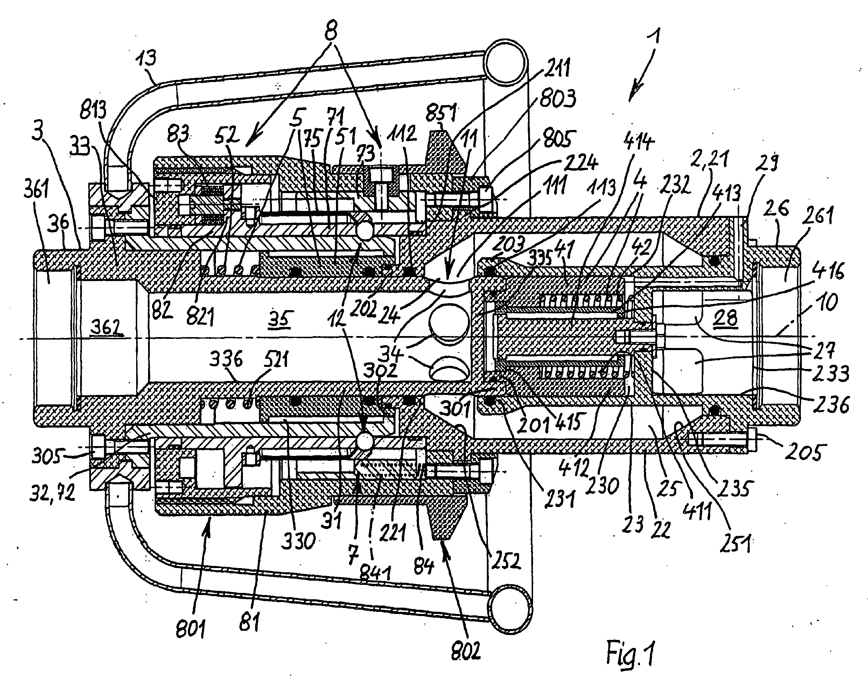

Fig. 1 zeigt die Kupplung 1 im verbundenen Zustand mit den aneinandergekuppelten Kupplungsteilen 2, 3. Die Kupplungsverbindung ist mittels eines Schnelltrennmittels verriegelt. Dieses umfasst eine Verriegelungseinrichtung 7 und eine durch eine Halteeinrichtung gebildete Löseeinrichtung 8. Die Halteeinrichtung wird durch zwei getrennt voneinander auslösende Auslöseeinrichtungen 801 und 802 gebildet.

Eine Stirnseite des Kupplungsteils 3 bildet eine Leitungsseite, die durch ein Leitungsanschlussstück 36 mit Leitungsverbindungsöffi1ung 361 bestimmt ist. Die andere Stirnseite bildet die Kupplungsseite zur Verbindung mit dem Kupplungsteil 2. Das Vaterteil-Kupplungsteil 3 ist aus einem das Vaterteil 31 bildenden Innengehäuse 33 und einem Außengehäuse 32 zusammengefügt. Die beiden Gehäuse 32, 33 sind als kreiszylindrische Hülsen ausgeführt, die mit der Kupplungsmittenachse 10 konzentrisch angeordnet und leitungsseitig in Schraubverbindung 305 fest aneinandergeflanscht sind.

Eine Stirnseite des Kupplungsteils 2 bildet eine Leitungsseite, die durch ein Leitungsanschlussstück 26 mit Leitungsverbindungsöffnung 261 bestimmt ist. Die andere Stirnseite bildet die Kupplungsseite zur Verbindung mit dem Kupplungsteil 3. Das Mutterteil 21 ist aus einem Innengehäuse 23, das einen kupplungsseitig offenen Hohlzylinder 232 aufweist, und einem Außengehäuse 22 zusammengefügt. Die Gehäuse 22, 23 sind kreiszylindrische, mit der Kupplungsmittenachse 10 konzentrische Hülsen. Das Innengehäuse 23 und das Außengehäuse 22 sind leitungsseitig in Schraubverbindung 205 fest aneinandergeflanscht.

Die Löseeinrichtung 8 weist einen Gehäusekörper 81 auf, der durch eine mit der Kupplungsachse 10 konzentrische Hülse gebildet ist, die an einer durch einen radialen Hülsenrand gebildeten Rückseite mittels einer Ringkappe 803 in Schraubverbindung 805 an einem kupplungsseitigen Anschlussrand 224 am Außengehäuse 22 des Mutterteils 21 befestigt ist. Der Gehäusekörper 81 ragt hülsenartig über einen Großteil des Kupplungsteils 3. Die Hülseninnenwand ist stufenartig abgesetzt und nimmt Teile der Einrichtungen 7, 8 auf.

Die Verriegelungseinrichtung 7 ist an dem Außengehäuse 32 des Vaterteils 31 ausgebildet. Das Außengehäuse 32 bildet einen Arretierkörper 72, in den kupplungsseitig in einer zur Mittenachse 10 senkrechten radialen Trennebene 120 außenseitig, gleichmäßig am Umfang verteilt Arretierausnehmungen 721 für durch Kugeln gebildete Verriegelungselemente 74 eingearbeitet sind. Der Arretierkörper 72 wird von einem hülsenartigen Käfigkörper 71 umgeben, der an dem Arretierkörper 72 axial verschieblich geführt ist. Der Käfigkörper 71 bildet mit einem nach außen gerichteten Radialrand 821 zugleich eine Schiebehülse 82 den. Auslöseeinrichtung 801. Diese ist, wie noch näher beschrieben wird, als selbsttätige Auslöseeinrichtung gestaltet.

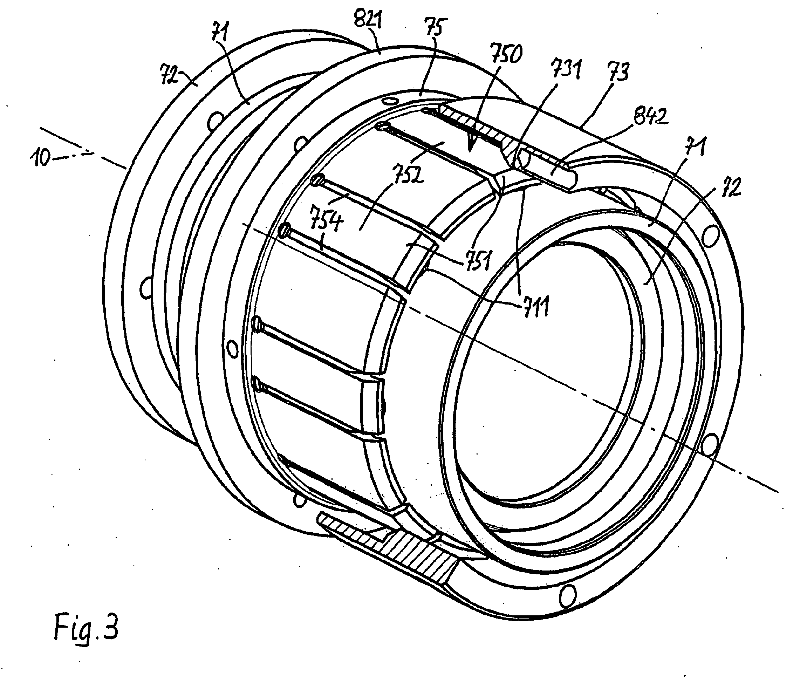

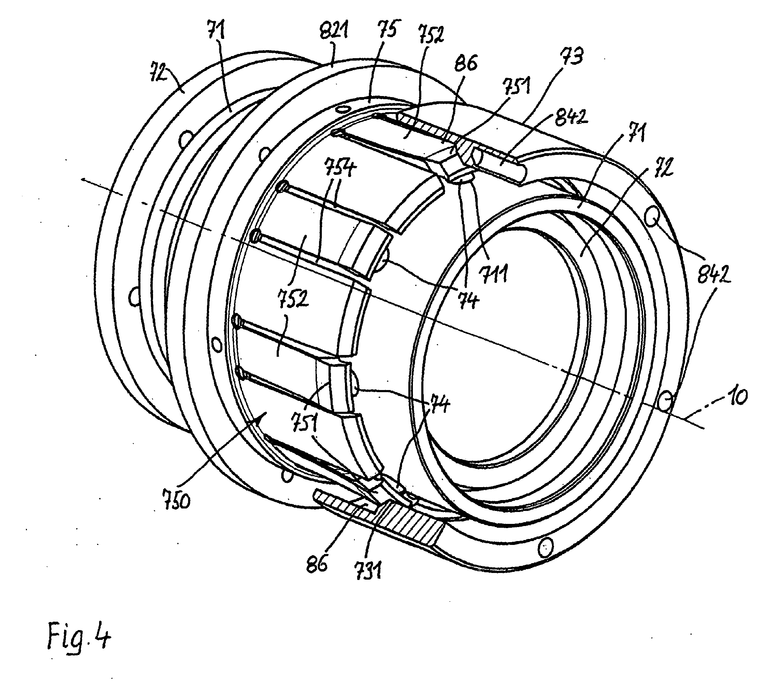

Der Käfigkörper 71 ist mit Käfige bildenden, radialen Durchgangslöchern 711 ausgestattet, die mit den Arretierausnehmungen 721 fluchten und korrespondieren. Die Käfiglöcher 711 sind insbesondere in Fig. 3 und 4 ersichtlich. Sie nehmen die Verriegelungskugeln auf, die im Verriegelungszustand (Fig. 1, 2 und 3) jeweils arretierend in den Arretierkörper 72 einfassen und am außenseitigen Längsumfang mit gegengehaltenem Kugelabschnitt hervorstehen. Die Arretierausnehmungen 721 weisen im axialen Querschnitt jeweils Trapezform mit Schrägflächen zur Kugelanlage auf. Von der Arretierposition sind sie radial nach außen in eine Löseposition verlagerbar, die in Fig. 4 dargestellt ist. In der Löseposition kommt der Arretierkörper 72 von dem Käfigkörper 71 frei, so dass die Arretier-Verriegelung aufgehoben ist und die Kupplungsteile 2, 3 zur Trennung in Axialrichtung frei sind. Jedes Käfigloch 711 verjüngt sich zur Innenseite des Käfigkörpers 71 hin derart, dass die Kugeln unverlierbar und schwimmend gehalten sind. Die beschriebene Struktur bildet eine Trennverriegelungsstelle 12, nämlich einen Trennbereich an der Trennebene 120 zwischen den Kupplungsteilen 2, 3.

Die Verriegelungseinrichtung 7 umfasst weiterhin erfindungsgemäß ein intermediäres Haltemittel 75 und einen hülsenartigen Haltekörper 73 nach Art eines Halterings. Der Haltekörper 73 ist konzentrisch mit der Mittenachse 10, wobei er an der Innenwand des Hülsen-Gehäusekörpers 81 axial verschieblich geführt ist. Das intermediäre Haltemittel 75 weist Verriegelungsschuhe 751 auf, die den Verriegelungselementen 74 zugeordnet sind und im Zustand der Verriegelung auf den am Käfigkörper 71 bzw. der Schiebehülse 82 hervorstehenden Teilen der Verriegelungselemente 74 zum Gegenhalten aufsitzen.

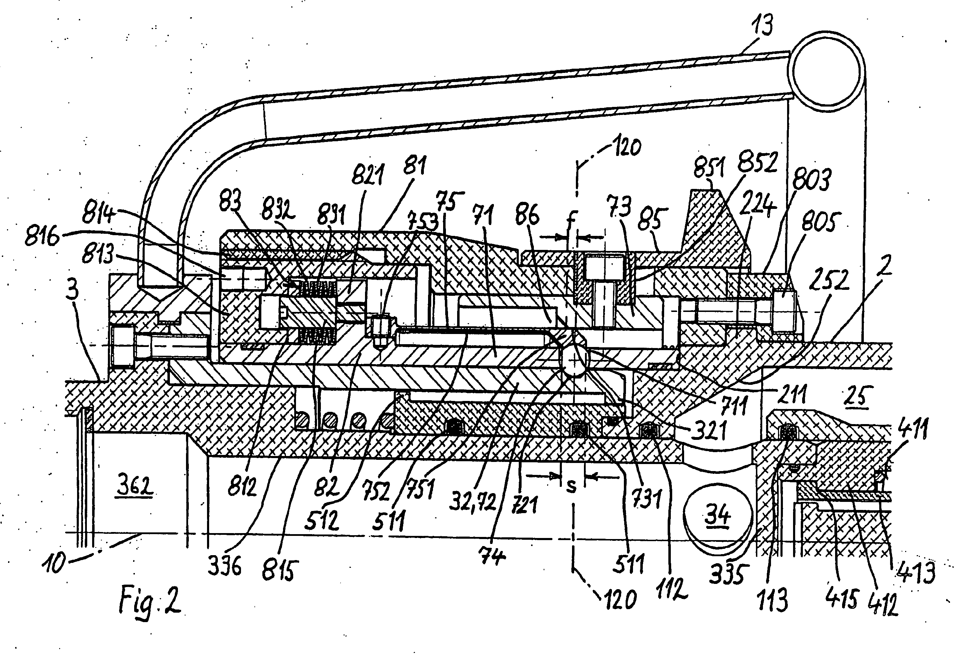

Das intermediäre Haltemittel 75 ist schiebefest an der Schiebehülse 82 befestigt, wobei es derart ausgebildet und angebracht ist, dass die nicht gegengehaltenen Verriegelungsschuhe 751 zusammen mit den Verriegelungselementen 74 frei radial ausweichlich sind. Anordnung und Funktion des intermediären Haltemittels 75 werden erfindungsgemäß dadurch erreicht, dass der Hülsen-Haltekörper 73 einen das intermediäre Haltemittel 75 in Axialrichtung einfassenden Halterand 731 aufweist. Dieser fasst das intermediäre Haltemittel 75 zum Verriegeln mit einem axialen Freigabemaß f axial und flächig ein. Dieser Verriegelungszustand wird insbesondere aus Fig. 2 und 3 deutlich.

Wie in den Fig. 1 bis 4 dargestellt, befindet sich der Haltekörper 73 in fester axialer Position an dem Gehäusekörper 81, die, wie noch beschrieben wird, mittels der Auslöseeinrichtung 802 hergestellt und gesichert wird sowie gelöst werden kann. In dieser Position befindet sich der Halterand 731 unverändert an der Trennebene 120 der Trennverriegelungsstelle 12.

Das intermediäre Haltemittel 75 weist im Ausführungsbeispiel axiale Lamellen 752 auf, die Bestandteil einer Lamellenhülse 750 sind. Im Bereich von Fußenden der Lamellen 752 ist die Lamellenhülse 750 an den Käfigkörper 71 bzw. die Schiebehülse 82 in Schraubverbindung 753 festgesetzt, wodurch die schiebefeste Anbringung hergestellt ist.

Wie aus Fig. 3 und 4 ersichtlich, sind die Lamellen 752 mit Axialschlitzen 754 fingerartig aus einem kreiszylindrischen Hülsenkörper geschnitten. Dieser Hülsenkörper weist eine Materialelastizität derart auf, dass für die Lamellen 752 jeweils im Bereich des Fußendes eine federelastische Anlenkung entsteht. Infolgedessen liegt jeweils der kopf seitige Verriegelungsschuh 751 unter radial gerichteter federelastischer Rückstellkraft gegen das zugehörige Verriegelungselement 74 an. Fig. 3 zeigt den Kupplungs-Verriegelungszustand.

Wie am besten aus Fig. 4 ersichtlich, dort bereits im Zustand der Entriegelung, sind die Verriegelungsschuhe 751 mit jeweils einer Sitzfläche ausgebildet, die jeweils in axialer Radialebene wenigstens eine Linienanlage an den Verriegelungselementen 74 herstellt. Zweckmäßig ist die Schuh-Sitzfläche mit einer der Kugeloberfläche entsprechenden konkaven Krümmung ausgebildet, die zwischen der Kugel und dem Verriegelungsschuh 751 eine Art Schnappverbindung derart herstellt, dass dann, wenn die Kugel unter den Verriegelungsschuh 751 gelangt, eine Klick- oder Rastverbindung entsteht. Die Breite jeder Federlamelle 752 ist durch einen Hülsenumfangsabschnitt bestimmt, und das Maß dieser Umfangsbreite kann zum Einstellen der Federelastizität der Lamelle 752 genutzt werden. Das Maß der Federelastizität jeder Lamelle 752 kann zweckmäßig auch durch die axiale Lamellenlänge bestimmt werden. Mit größeren Längen wird die Federelastizität vorteilhaft weicher.

Erfindungsgemäß greift der Haltekörper 73 zum Verriegeln nicht unmittelbar an den Verriegelungselementen 74, sondern nur mittelbar an dem intermediären Haltemüttel 75 bzw. dessen Verriegelungsschuhen 751 an. Dadurch erreicht man, dass die zum Verriegeln an dem Käfigkörper 71 hervorstehende Oberfläche der Verriegelungselemente 74 lediglich statisch in Radialrichtung durch das gemeinsam mit den Verriegelungselementen radial ausweichbare intermediäre Haltemittel 75 belastet wird.

Im Ausführungsbeispiel sind der Haltekörper 73 und das intermediäre Haltemittel 75 zum Lösen der Verriegelung relativ zueinander axial verlagerbar angeordnet. Zum Entriegeln bedarf es nur axialer Verlagerung der Schiebehülse 82 bzw. des intermediären Haltemittels 75 mit dem axialen Freigabemaß f, das durch den Halterand 731 bestimmt ist. Das Freigabemaß f kann, wie dies in der Zeichnung dargestellt ist, besonders klein gehalten werden, wobei besonders klein dadurch definiert ist, dass das Freigabemaß f kleiner als die axiale Sitzdimension s des Sitzes ist, in dem das intermediäre Haltemittel auf den Verriegelungselementen aufsitzt. Zweckmäßig wird das axiale Freigabemaß f kleiner als die Hälfte der axialen Sitzdimension s gewählt.

Die Verriegelungsschuhe 751 kommen unter dem Haltekörper 73 ohne eigene Halte-Sperrfunktion frei, wenn der Käfigkörper 71 und damit gleichermaßen das intermediäre Haltemittel 75 um nur das geringe Freigabemaß f axial unter dem Haltekörper 73 weggezogen werden. Während in Fig. 3 noch der Verriegelungszustand dargestellt ist, zeigt Fig. 4 die Phase, in der das intermediäre Haltemittel 75, also die Verriegelungsschuhe 751 radial in einen Ausweichraum 86 zurückweichen, der durch den Bereich einer radial zurückspringenden Innenwand des Hülsen-Haltekörpers 73 gebildet ist. Beim Zurückweichen kommt das Vaterteil-Außengehäuse 32, das den Arretierkörper 72 bildet, von dem Käfigkörper 71 frei. Die einander zugewandten bzw. sich überlappenden Ränder der Verriegelungsschuhe 751 und des Haltekörpers 73 sind mit ausgeprägten Fasen versehen, um gleitendes radiales Abheben des intermediären Haltemittels 75 von den Verriegelungselementen 74 zu begünstigen.

Ein selbsttätiges Entriegeln erfolgt im Ausfühnmgsbeispiel zur Nottrennung mittels der Auslöseeinrichtung 801. Diese umfasst eine zwischen den radialen Außenrand 821 der Schiebehülse 82 und einen Ringboden 812 einer Ringhülse 813 geschaltete Kraftquelle 83. Die Ringhülse 813 schließt den Gehäusekörper 81 an seinem freien vorderseitigen Ende, das dem rückseitigen, an dem Kupplungsteil 2 befestigten Ende gegenüberliegt. Die Ringhülse 813 ist mittels eines axialen Umfangsgewindes 814 in den Gehäusekörper 81 eingeschraubt. Das eine Ende der Schiebehülse 82 liegt axial schiebegleitbeweglich an axialer innerer Umfangsfläche der Ringhülse 813 an, und das andere Ende liegt axial schiebegleitbeweglich an einem axialen Umfangsrand des Kupplungsteils 2 an.

Die Kraftquelle 83 wird durch axiale, im Ausführungsbeispiel vorteilhaft als Tellerfedern vorgesehene Druckfedern 831 gebildet, die in einem Federraum 832 sitzen, der zwischen dem äußeren Radialwand 821 und dem Ringboden 812 ausgebildet ist. Die Federn werden auf axialen Schraubenkemen 815 gehalten, die an den Radialrand 821 geschraubt sind. Die Druckfedern 831 werden in dem Federraum 832 unter vorgegebene, Haltekraft bestimmende Vorspannung gesetzt. Dabei stützt sich jede Druckfeder 831 einerseits an der Schiebehülse 82, nämlich an dem Radialrand 821 und andererseits über den Ringboden 812 und den Gehäusekörper 81 an dem damit festen Kupplungsteil 2 ab. Der Radialrand 821 bzw. die Schiebehülse 82 sind an dem Kupplungsteil 2 über eine Schulter 211 gegengelagert. Der Federraum 832 ist zum Einstellen der Federvorspannung axial längenverstellbar, und zwar mittels wählbarer axialer Einschraubweite der Ringhülse 813. Zu diesem Zweck ist der Ringboden 812 außenseitig mit Gewindebohrungen 816 zum Anschluss von Werkzeug versehen.

Die Charakteristik allgemein der Kraftquelle 83, das heißt im Ausführungsbeispiel eines Pakets der Druckfedern 831 ist derart, dass im vorgespannten Zustand eine konstante Vorspannkraft (Haltekraft) derart erzeugt wird, dass sie einer zwischen den Kupplungsteilen 2, 3 an der Trennverriegelungsstelle 12 auftretenden Kraft standhält, so lange diese Kraft die Haltekraft nicht überwindet. Das heißt, dass die Schiebehülse 82 gegen die durch insoweit steif gehaltene Federn erzeugte Vorspannkraft zur Freigabe des intermediären Haltemittels 75 unter dem Halterand 731 erst und nur bewegt wird, wenn eine Auslösekraft zwischen den Kupplungsteilen 2, 3 die Haltekraft überschreitet, wobei die Schiebehülse 82 (der Käfigkörper 71) mit dem Freigabemaß f von der Schulter 211 des Kupplungsteils 2 axial weggezogen wird.

Die Charakteristik der Kraftquelle 83 ist im Ausführungsbeispiel vorteilhaft und bevorzugt auch derart, dass der Kraftverlauf über dem Weg, ausgehend von bei dem Wegmaß Null konstanter, durch die Vorspannung bestimmter Haltekraft, in einem dem Freigabemaß f entsprechenden Wegbereich flach ist. Damit erreicht man, dass dann, wenn die Auslösekraft die Haltekraft in geringstem Maß definiert überschreitet, die Verschiebung der Hülse 82 zusammen mit dem intermediären Haltemittel 75 besonders ausgeprägt und groß ist, und zwar insbesondere durch flachen, insbesondere linearen, gegebenenfalls vorteilhaft auch durch unterproportionalen und/oder degressiven Kraftverlauf. Infolgedessen wird das Freigabemaß f in Korrelation mit dem feder-definierten kleinen Auslöseweg klein gewählt. Auch findet zwischen dem intermediären Haltemittel 75 und dem Haltekörper 73 in der geringen, aber flächigen Überlappung mit dem Freigabemaß f zum Entriegeln nur eine axial gleitende, Verschleiß vermeidende Relativbewegung statt. Im Ergebnis ist die Auslösung (Entriegelung) in besonderem Maße fokussiert. Man erreicht ein besonders enges Toleranzfenster. Das heißt, dass eine Abweichung der tatsächlich auslösenden Kraft von der vorgegebenen, durch die Haltekraft definierten Auslösekraft in höchstem Maß minimiert ist. Da die Verriegelungselemente 74 erfindungsgemäß statisch frei von Reibungskraft belastet werden, wobei insbesondere Kugeln beim Entriegeln rotationsfrei bleiben, ist auch dadurch Verschleiß besonders reduziert. Man erhält eine besonders gute Wiederholgenauigkeit der Auslösung selbst bei großer Zahl von Kupplungsvorgängen.

Die Kupplung 1 wird im Fall der Nottrennung dadurch entriegelt, dass beim Auftreten der die Haltekraft überwindenden Auslösekraft an der Trennverriegelungsstelle 12 der Arretierkörper 72 in Verriegelung mit dem Käfigkörper 71 relativ von dem Kupplungskörper 2 axial weggetrieben wird, und zwar nur mit dem geringen definierten Weg des axialen Halterand-Freigabemaßes f. Nach diesem Weg lösen sich die Kupplungsteile 2, 3 schlagartig voneinander. Zugleich wird der Käfigkörper 71 durch die Rückstellkraft der Kraftquelle 83 wieder in ihre Vorspann- und Anschlagposition gegen die Schulter 211 des Kupplungsteils 2 gesetzt.

Die Auslöseeinrichtung 802 ist eine handbetätigbare Auslöseeinrichtung. Sie umfasst eine manuell betätigbare Kraftquelle 84, die zwischen den Gehäusekörper 81 und den Haltekörper 73 geschaltet ist. Im Ausführungsbeispie! sind mehrere Druckschraubenfedem 841 über den Umfang des Haltekörpers 73 verteilt angeordnet. Wie aus Fig. 1, 3 und 4 ersichtlich, fasst jede Druckfeder 841 in ein axiales Sackloch 842 in dem Haltekörper 73 ein. Jede Druckfeder 841 ist an ihrem einen Ende am Sacklochboden abgestützt, während ihr anderes Ende an einem Radialrand des Gehäusekörpers 81 gegengelager ist. Diese Anordnung befindet sich im Bereich zwischen dem intermediären Haltemittel 75 und der von der Befestigungs-Ringkappe 803 abgeschlossenen Rückseite des Gehäusekörpers 81. Infolgedessen kann der Haltekörper 73 gegen die Kraft des Pakets der Druckfeder 841 axial in Richtung der Rückseite des Gehäusekörpers 81 verschoben werden. Zu diesem Zweck ist der Haltekörper 73 mit einer außen an dem Gehäusekörper 81 axial verschieblich geführten Betätigungshülse 85 mit Handhabe 851 verbunden, und zwar in Schraubverbindung über wenigstens einen Radialsteg 852, der den Gehäusekörper 81 durch einen axial ausreichend weiten Durchgang radial durchgreift.

Man erkennt, dass mittels der handbetätigbaren Auslöseeinrichtung 802 ein manuelles Auslösen zum Entriegeln dadurch möglich ist, dass die Betätigungshülse 85 gegen die Kraft der Druckfedern 841 zurückgezogen wird, um das intermediäre Haltemittel 75 von dem Halterand 731 des Haltekörpers 73 zu befreien. Zweckmäßig wird auch die Kraftquelle 84 unter Haltekraft bestimmende Vorspannung gesetzt, die zum Verschieben des Haltekörpers 73 zu überwinden ist.

Besondere Bedeutung kommt der handbetätigbaren Auslöseeinrichtung 802 zum Zusammenstecken der Kupplungsteile 2, 3 zu. Beim Zusammenstecken wird der Haltekörper 73 mittels der Handhabe 851 gegen die Federkraft zunächst zurückgehalten. In diesem Zustand wird das Vaterteil 3 mit seinem Arretierkörper 72 in den Käfigkörper 71 gesteckt. Zum Ende des Einsteckens werden die Verriegelungselemente 74 durch Aufgleiten an einem gefasten Rand des Arretierkörpers 72 gegen die federelastische Rückstellkraft des intermediären Haltemittels 75 zunächst angehoben und dann in die Arretierausnehmungen 721 bewegt. Die genannte konkave Krümmung der Sitzflächen der Verriegelungsschuhe 751 ist derart, dass die Federlamellen 752 spürbar auf die Kugeln aufschnappen. Dadurch entsteht eine praktische, spürbare Verriegelungskontrolle. Die Handhabe 851 wird dann losgelassen, so dass der Haltekörper 73 in seine Überlappungsposition mit dem Halterand 731 zum Sichern der Verriegelung gelangt. Die einander zugewandten Fasen an den Verriegelungsschuhen 751 und dem Haltekörper 73 begünstigen die Gleitüberlappung.

Die Kupplung 1 gemäß Ausführungsbeispiel ist mit selbsttätigen Ventilmitteln 4, 5 ausgestattet, die derart eingerichtet und ausgebildet sind, dass jedes Kupplungsteil 2, 3 im nicht-verbundenen Zustand der Kupplung 1 kupplungsseitig dichtend geschlossen ist, während die Kupplungsteile 2, 3 im aneinandergekuppelten Verbindungszustand kupplungsseitig zum Durchtritt von Medium geöffnet sind. Die Ventilmittel 4, 5 sind die einzigen, ausschließlichen Ventilmittel der Kupplung 1.

Die Schnelltrennkupplung 1 mit den selbstschließenden, gegeneinander arbeitenden Ventilmitteln 4, 5 erzeugt eine innere Druckkraft an der Trennverriegelungsstelle 12, die die Kupplungsteile 2, 3 zur Nottrennung auseinandertreibt. Um die Haltekraft der selbsttätigen Auslöseeinrichtung 801 zu bestimmen, muss die Ventildruckkraft berücksichtigt werden. Die Haltekraft ist um die Ventildruckkraft höher zu wählen, als die gewünschte, durch Zug auf die Kupplungsteile entstehende Auslösekraft.

Um die erfindungsgemäße, weitgehend druckkraft-genaue Notauslösung in besonderem Maß zu nutzen und zu optimieren, kommt es darauf an, dass das Schnelltrennmittel auch Maßnahmen umfasst, die die Trennverriegelungsstelle 12 vollständig von dem Einfluss eines inneren Medium-Betriebsdrucks in der Kupplungsverbindung befreien. Man erreicht dann, dass die Abreißkraft, also die die selbsttätige Entriegelung der Kupplungsverbindung bewirkende definierte Auslösekraft an der Trennverriegelungsstelle 12 ausschließlich durch die Auslöseeinrichtung 801 bestimmt und vorgegeben wird.

Nach alledem kommt es in bevorzugter Gestaltung der Erfindung darauf an, dass die Trennverriegelungsstelle 12 von aus Mediumdurchfluss resultierenden Axialkräften vollständig freigehalten wird. In Weiterbildung der Erfindung ist die Maßnahme wesentlich, dass durch die Ventilmittel 4, 5 insbesondere unter Mediumhochdruck kein von der Druckhöhe abhängiger Einfluss ausgeübt wird. Dies gelingt mit nachstehend beschriebenen Merkmalen zur vollständigen Druckneutralisierung der die Ventilmittel 4, 5 aufweisenden Kupplung 1.

Das Innengehäuse 23 und das Außengehäuse 22 des Mutterteils 21 bilden besondere, den Mediumströmungsweg in dem Kupplungsteil 2 gestaltende Räume aus. Zwischen axial gerichteter Innenwand des Außengehäuses 22 und gleichfalls gerader, axial gerichteter Außenwand des Innengehäuses 23 ist ein axialer umlaufender Medium-Ringkanal 25 ausgebildet. Dieser erstreckt sich leitungsseitig mit einer zur Kupplungsmittenachse 10 weisenden Endfläche 251 bis in den Bereich über radiale Durchströmungsöffnungen 27 in der axialen (längsseitigen) Umfangswand 236 des Innengehäuses 23. Der axiale Ringkanal 25 erstreckt sich kupplungsseitig mit zur Kupplungsmittenachse 10 weisender Endfläche 252 über einen radial gerichteten Übergangs-Ringkanal 111. Dieser bildet an einer durch einen Bereich bestimmten Stelle 11 einen Übergang für Medium im Verbindungszustand der Kupplung 1. Der axiale Ringkanal 25, der umlaufend ausgebildet ist, ist zur Innenseite des Kupplungsteils 2, das heißt zur Kupplungsmittenachse 10 hin, durch eine einzige äußere Anschluss-Durchströmungsöffnung 24, die entsprechend ringförmig umläuft, offen. Die äußere Durchströmungsöffnung 24 ist radial von der Kupplungsmittenachse 10 weiter weg gelegen als zugehörige Anschluss-Durchströmungsöffnungen 34 des Vaterteils 31.

Die Leitungsverbindungsöffnung 261 geht in einen zentralen Mediumkanal 28 über, der durch einen sich axial erstreckenden topfartigen Hohlzylinder 233 des Innengehäuses 23 gebildet ist. Der Hohlzylinder 233 endet kupplungsseitig an einer die beiden Hohlzylinder 232, 233 trennenden radialen Zwischenwand 235 mit geschlossener planflächiger Bodenwand, die zur Kupplungsmittenachse 10 senkrecht gerichtet ist. Die radialen Durchströmungsöffnungen 27 in der Wand 236 sind in ausreichender Zahl und Anpassung an die Strömungskapazität des Kanals 28 gleichmäßig über den Umfang des Innengehäuses 23 verteilt und weisen zweckmäßig jeweils gleichen, kreisformähnlichen Durchgangsquerschnitt auf Sie münden unmittelbar in den zentralen Mediumkanal 28, wobei sie unmittelbar an die Zwischenwand 235 angrenzen. Auch ist der Strömungsquerschnitt des Ringkanals 25 entsprechend dem Strömungsvermögen des Kanals 28 ausgelegt.

Der radiale Übergangs-Ringkanal 111 ist mit der äußeren Anschluss-Durchströmungsöffnung 24 zwischen einer vorderen Steckfassung 221 und einer axial versetzten hinteren Steckfassung 231 des Mutterteils 21 ausgebildet. Die vordere Steckfassung 221 ist durch eine kupplungsseitige, Kreisquerschnitt aufweisende Stirnöffnung des Außengehäuses 22 ausgebildet. Die hintere Steckfassung 231 ist durch eine der vorderen Steckfassung 221 gegenüberliegende, Kreisquerschnitt aufweisende Stirnöffnung des Innengehäuses 23 gebildet. Die Steckfassungen 221, 231 fluchten axial miteinander und bilden zusammen eine Mutterteilbuchse. Zwischen den Steckfassungen 221, 231 ist die umlaufende äußere Anschluss-Durchströmungsöffnung 24 ausgebildet. Die Ausbildung der Mutterteilbuchse ist auf die Ausbildung mit Innengehäuse und Außengehäuse nicht beschränkt. Sie kann z. B. auch allein durch ein die Steckfassungen aufweisendes Innengehäuse gebildet sein.

Der Hohlzylinder 232 bildet zwischen der Zwischenwand 235 und seiner kupplungsseitigen Stirnöffnung einen Ventilaufnahmeraum 230 für das Mutterteil-Ventihnittel 4 aus. Dieses ist durch einen Schließkörper 41 und ein diesen beaufschlagendes Antriebsmittel 42 gebildet. Der Schließkörper 41 ist als Zylinderkörper mit einem Kreisquerschnitt ausgebildet, der dem Kreisquerschnitt des Ventilaufnahmeraums 230 entspricht. Der Schließkörper 41 sitzt im axial beweglichen Gleit-Schiebesitz in dem Ventilaufnahmeraum 230. Das Antriebsmittel 42 wird durch eine Druck-Schraubenfeder 421 gebildet, die axial in einen zur Zwischenwand 235 offenen kreisfönmigen Ringraum 411 innerhalb des Schließkörpers 41 einfasst. An ihrem einen Ende stützt sich die Schraubenfeder 421 gegen die Zwischenwand 235 ab, während sie an ihrem anderen kupplungsseitigen Ende gegen eine Schulter des Ringraums 411 abgestützt ist.

Der Schließkörper 41 ist durch eine axiale Außenhülse 412 und eine damit konzentrische Innenhülse 413 gebildet. Die Hülsen 412, 413 bilden zwischen sich den Ringraum 411 aus. Die Innenhülse 413 ist über einen axialen Zylinderkern 414 gesetzt und daran geführt. Der Zylinderkern 414 ist mittels fester Schraubverbindung an der Zwischenwand 235 befestigt.

Der Schließkörper 41 ist so dimensioniert, dass er in der in Fig. 1 dargestellten Kupplungsverbindung so weit und derart in das Innengehäuse 23 bzw. den Ventilaufnahmeraum 230 eintaucht und eingekapselt ist, dass die Steckfassung 231 zur dichtenden Aufnahme eines durch einen Steckrand 301 gebildeten Steckendes des Vaterteils 31 frei ist. Zudem ist der Schließkörper 41 so dimensioniert, dass er bei nicht verbundener Kupplung 1 mit seinem Außenumfang in die Steckfassungen 221, 231 einfasst und damit die äußere Anschluss-Durchströmungsöffnung 24 überbrückt und dichtend schließt. Die Dichtung ist durch zwei gleiche radiale Umfangsdichtungen 112, 113 ausgebildet, die in eine umlaufende Nut an der Steckfassung 221 bzw. in eine umlaufende Nut an der Steckfassung 231 eingelassen sind. Der Ventilaufnahmeraum 230 ist über einen Entlüftungskanal 29 mit der Außenumgebung verbunden.

Zwischen der Außenhülse 412 und der Innenhülse 413 ist mit radialen Vorsprüngen eine Verzahnung 4l5 hergestellt, die die beiden Hülsen 412, 413 unter Druck- bzw. Schiebekraft in beiden Axialrichtungen einander mitnehmend aneinanderhält. Die Innenhülse 413 weist leitungsseitig einen Radialrand 416 auf, der im Schließzustand des Ventilmittels 4 mittels der vorgespannten Schraubenfeder 421 gegen einen radialen kupplungsseitigen Rand des Zylinderkerns 414 anschlägt, so dass der axiale Ventil-Schließhub des Schließkörpers 41 definiert begrenzt ist.

Der Hohlzylinder des Vaterteil-Innengehäuses 33 bildet einen axialen zentralen Anschlusskanal 35 für Medium aus, der sich mit einem leitungsseitig radial aufgeweiteten Abschnitt 362 zwischen einer kupplungsseitigen Zwischenwand 335 am Vaterteil-Steckende und der Verbindungsöffnung 361 erstreckt. Die Zwischenwand 335 bildet eine den Anschlusskanal 35 kupplungsseitig abschließende radiale Bodenwand mit zur Kupplungsmittenachse 10 senkrechter planer Bodenfläche. Dort weist das Kanalende die radial gerichteten inneren Anschluss-Durchströmungsöffnungen 34 in der seitlichen (axialen) Hohlzylinderwand 336 auf. Die Öffnungen 34 sind in ausreichender Zahl und Anpassung an die Strömungskapazität der Kanäle 28,35 gleichmäßig über den Umfang des Innengehäuses 33 verteilt und weisen zweckmäßig jeweils gleichen, kreisformähnlichen Durchgangsquerschnitt auf. Sie münden unmittelbar in den zentralen Vaterteil-Anschlusskanal 35, wobei sie unmittelbar an die Zwischenwand 335 angrenzen.

Zwischen axialer längsseitiger Außenwand des Innengehäuses 33 und längsseitiger axialer Innenwand des Außengehäuses 32 ist ein Ventilaufnahmeraum 330 mit kreisringförmigem Querschnitt für das Vaterteil-Ventilmittel 5 ausgebildet. Dieses weist einen Hülsen-Schließkörper 51 und ein diesen beaufschlagendes Antriebsmittel 52 in Form einer Druck-Schraubenfeder 521 auf.

Der Schließkörper 51 sitzt im gedichteten axialen Schiebe-Gleitsitz auf dem Innengehäuse 33. Der Schließkörper 51 und die Schraubenfeder 521 werden im Zustand der Kupplungsverbindung, wie in Fig. 1 dargestellt, vollständig von dem Ventilaufnahmeraum 330 aufgenommen und gegen Medium gedichtet eingekapselt. Die Schraubenfeder 521 stützt sich leitungsseitig gegen einen eingezogenen radialen Außenrand des Innengehäuses 33 und kupplungsseitig gegen einen radialen Rand des Schließkörpers 51 ab. Der Ventilaufnahmeraum 330 ist über einen nicht dargestellten Entlüftungskanal mit der Außenumgebung verbunden.

Im in der Zeichnung nicht dargestellten Zustand der nicht verbundenen Kupplung 1 schließt der Schließkörper 51 im Dichtsitz die inneren Anschluss-Durchströmungsöffnungen 34. Die Ventildichtung weist zwei radial wirkende Umfangsdichtungen 511 auf, die zum Schließen der Durchströmungsöffnungen 34 in Axialrichtung beidseitig derselben zu liegen kommen. Sie sind in umlaufende Ringnuten an der inneren Umfangswand des Hülsen-Schließkörpers 51 eingefasst.

Der Schließkörper 51 wird in seiner nicht dargestellten Ventil-Schließposition mittels der vorgespannten Schraubenfeder 521 gehalten. In dieser Schließposition sitzt der Schließkörper 51 mit einem Radialrand 512 gegen einen Radialrand 321 des Außengehäuses 32 an, so dass der axiale Ventil-Schließhub des Schließkörpers 51 definiert begrenzt ist.

Die kupplungsseitigen Ränder der Kupplungsteile 2, 3 sind jeweils mit axialem Versatz wechselseitig mit entsprechenden buchsenartigen Aufnahmen gestuft angeordnet und ausgebildet. Die Steckfassung 221 bilden einen kupplungsseitigen Steckrand 202 aus. Die Steckfassung 231 weist einen kupplungsseitigen Steckrand 203 auf. An dem Mutterteil-Schließkörper 41 ist ein Steckrand 201 ausgebildet. Das Vaterteil 31 weist einen kupplungsseitigen Steckrand 301 auf. An dem Vaterteilschließkörper ist ein Steckrand 302 ausgebildet.

Der Steckrand 201 ist zum gedichteten Eingriff in eine durch den Steckrand 301 gebildete Buchse vorgesehen. Der Steckrand 301 und das anschließende Steckende des Vaterteils 31 wird von den buchsenartigen Steckfassungen 221, 231 mit Steckrand 202 bzw. 203 aufgenommen. Der Steckrand 202 der Steckfassung 221 fasst dichtend in einen buchsenartigen Ringraum, gebildet durch den Steckrand 302 des Schließkörpers 51, ein. In Fig. 1 sitzt der Steckrand 301 auf Stoß mit zurückspringendem Stirnrad der Außenhülse 412 des Schließkörpers 41, und der Steckrand 202 sitzt auf Stoß mit zurückspringendem Stirnrand des Schließkörpers 51.

Die Medium-Trennübergangsstelle 11, die Bestandteil des eine Sicherung bildenden Schnelltrennmittels ist, ist, wie dies aus Fig. 1 hervorgeht, druckneutral ausgebildet. Die Trennübergangsstelle 11 ist durch den Bereich der äußeren Anschluss-Durchströmungsöffnung 24, der inneren Anschluss-Durchströmungsöffnungen 34 und dem radialen Übergangs-Ringkanal 111 bestimmt. Die inneren Anschluss-Durchströmungsöffnungen 34 sind radial mit dem radialen Übergangs-Ringkanal 111 ausgerichtet und münden in ihn an der äußeren Anschluss-Durchströmungsöffnung 24. Man erreicht mit diesen Maßnahmen und den gleich ausgebildeten radialen Umfangsdichtungen 112, 113, dass bei Mediumdurchfluss an der Trennübergangsstelle 11 axial wirkende Aktions- und Reaktionskräfte druckneutralisierend ausgeglichen sind. Es wird in Verbindung mit den eingekapselten Ventilmitteln 4, 5 sichergestellt, dass die genannte Druckneutralisierung ausschließlich zwischen Teilen der Kupplungsteile 2, 3 ausgebildet und hergestellt ist, die im Medium-Strömungsweg vollständig frei von axial beweglichen Teilen der Ventilmittel 4, 5 sind. Sowohl die Ventilantriebsmittel 42, 52, als auch die Ventil-Schließkörper 41, 51 sind gänzlich aus dem Strömungsweg herausgenommen und von diesem gedichtet abgetrennt. Infolgedessen wird die im Kupplungsverbindungszustand zwischen den im Stoßsitz befindlichen Ventil-Schließkörpem 41, 51 wirkende axiale Kraft frei von Einfluss des durch die Kupplung 1 fließenden Mediums konstant gehalten.

An dem Kupplungsteil 3 ist ein dieses und die Löseeinrichtung 8 umgebender Fangkorb 13 befestigt, der das Kupplungsteil 3 mit der Löseeinrichtung 8 bei der Nottrennung vor Beschädigung durch Aufprall schützt.

## Patentansprüche

1. Schnelltrennkupplung (1) zum dichtenden Verbinden von flüssige oder gasförmige Medien transportierenden Leitungen, umfassend
a) zwei trennbar verbundene, einen Medium-Strömungsweg in der Kupplung (1) herstellende, sich jeweils zwischen Kupplungsseite und Leitungsseite in gerader Kupplungsachse (10) axial erstreckende Kupplungsteile (2, 3) mit Mutterteil (21) und Vaterteil (31),
b) eine die beiden Kupplungsteile (2, 3) in der trennbaren Kupplungsverbindung haltende Verriegelungseinrichtung (7) und
c) ein Schnelltrennmittel, umfassend die Verriegelungseinrichtung (7) und eine damit zusammenwirkende Löseeinrichtung (8) zum Trennen der beiden Kupplungsteile (2, 3) an einer Trennverriegelungsstelle (12),
c1) wobei die Verriegelungseinrichtung (7), die einen an dem einen (ersten) Kupplungsteil (2) vorgesehenen Käfigkörper (71), einen an dem anderen (zweiten) Kupplungsteil (3) vorgesehenen Arretierkörper (72), einen Haltekörper (73) sowie in dem Käfigkörper (71) zwischen Arretierposition und Löseposition radial verlagerbare Verriegelungselemente (74) umfasst, derart eingerichtet ist, dass die Verriegelungselemente (74) zum Verriegeln der Kupplungsverbindung an der Trennverriegelungsstelle (12) im Arretiersitz in den Arretierkörper (72) einfassen und mittels des Haltekörpers (73) in dieser Arretierposition gehalten werden, und
c2) wobei die Löseeinrichtung (8), die eine Halteeinrichtung (801, 802), den Haltekörper (73) und einen Ausweichraum (86) umfasst, derart eingerichtet ist, dass die Halteeinrichtung (801, 802) die Verriegelung sichert und entsichert, wobei sie die Verriegelungselemente zum Entsichern gegenüber dem Haltekörper (73) freikommen lässt, die **dadurch**, in den Ausweichraum (86) ausweichend, zum Entriegeln der Kupplungsverbindung in ihre Löseposition gelangen,
d) ein intermediäres Haltemittel (75), das zwischen den Verriegelungselementen (74) und dem Haltekörper (73) derart angeordnet und eingerichtet ist, dass der Haltekörper (73) die Verriegelungselemente (74) mittelbar mit dem intermediären Haltemittel (75) in der Arretierposition hält, wobei das intermediäre Haltemittel (75) wenigstens im Wesentlichen nur radial gegenüber den Verriegelungselementen (74) ausweichlich ist und der Haltekörper (73) zum Ausüben der mittelbaren Haltefunktion einen das intermediäre Haltemittel (75) in Axialrichtung einfassenden Halterand (731) aufweist, der das intermediäre Haltemittel (75) zum Verriegeln flächig einfasst und zum Lösen der Verriegelung mittels der Halteeinrichtung (801, 802) freigibt,
**dadurch gekennzeichnet, dass**
das intermediäre Haltemittel (75) auf den Verriegelungselementen (74) aufsitzende Verriegelungsschuhe (751) aufweist, die zusammen mit den Verriegelungselementen (74) in den Ausweichraum (86) radial ausweichend angeordnet und ausgebildet sind, dass die Verriegelungsschuhe (751) mit einer Sitzfläche ausgebildet sind, die wenigstens eine Linienanlage an den Verriegelungselementen (74) herstellt, und dass die Verriegelungsschuhe (751) unter radial gerichteter elastischer Rückstellkraft gegen die Verriegelungselemente (74) anliegen, wobei die Verriegelungselemente (74) in ihrem Arretiersitz axiale Relativbewegung zwischen dem Käfigkörper (71) und dem Arretierkörper (72) sperren.

2. Kupplung nach Anspruch 1, **dadurch gekennzeichnet, dass** der Haltekörper (73) und das intermediäre Haltemittel (75) zum Lösen der Verriegelung mittels der Halteeinrichtung (801, 802) relativ zueinander derart axial verlagerbar angeordnet sind, dass das intermediäre Haltemittel (75) durch die axiale
Verlagerung mit axialem Freigabemaß (f), das durch den Halterand (731) bestimmt ist, von dem Haltekörper (73) freikommt und **dadurch** zusammen mit den Verriegelungselementen (74) in den Ausweichraum (86) radial entweicht.

3. Kupplung nach Anspruch 2, **dadurch gekennzeichnet, dass** das intermediäre Haltemittel (75) von dem Halterand (731) des Haltekörpers (73) nur mit einem axialen Freigabemaß (f) flächig eingefasst wird, das kleiner als die axiale Sitzdimension (s) eines Sitzes ist, in dem das intermediäre Haltemittel (75) auf den Verriegelungselementen (74) aufsitzt, wobei vorzugsweise das axiale Freigabemaß (f) kleiner als die Hälfte der axialen Sitzdimension (s) ist.

4. Kupplung nach Anspruch 2 oder 3, **dadurch gekennzeichnet, dass** die Halteeinrichtung eine selbsttätige Auslöseeinrichtung (801) umfasst, die eine zwischen das erste Kupplungsteil (2) und den Käfigkörper (71) geschaltete, ein selbsttätiges Entriegeln bewirkende Kraftquelle (83) zur Nottrennung aufweist, die mit von dieser erzeugter, vorgegebener Haltekraft derart eingerichtet ist, dass die axiale Freigabe-Verlagerung mit dem durch den Halterand (731) bestimmten Freigabemaß (f) dann und nur dann stattfindet, wenn die vorgegebene Haltekraft durch eine dieser entgegengerichteten, zwischen den Kupplungsteilen auftretenden Auslösekraft in Korrelation mit dem Freigabemaß (f) überwunden wird.

5. Kupplung nach Anspruch 4, **dadurch gekennzeichnet, dass** die Kraftquelle (83) in ihrem definierten vorgespannten Zustand eine Kraftcharakteristik über dem Weg aufweist, die, ausgehend von mit dem Wegmaß Null konstanter, durch die Vorspannung bestimmter Haltekraft jedenfalls in einem dem Freigabemaß (f) entsprechenden Wegbereich flach verläuft.

6. Kupplung nach Anspruch 4 oder 5, **dadurch gekennzeichnet, dass** die Nottrenn-Kraftquelle (83) durch wenigstens eine Druckfeder (831) mit zugehörigem, sie in axialer Ausrichtung aufnehmendem Federraum (832) ausgebildet ist, in dem die Druckfeder (831) zum Erzeugen der Haltekraft vorgespannt ist und der vorzugsweise zum Einstellen der Haltekraft axial längenverstellbar ist.

7. Kupplung nach einem der Ansprüche 2 bis 6, **dadurch gekennzeichnet, dass** die Halteeinrichtung (8) eine handbetätigbare Auslöseeinrichtung (802) umfasst, die eine manuell betätigbare, an einem Gehäusekörper (81) der Auslöseeinrichtung (802) gelagerte Kraftquelle (84) aufweist, gegen deren Kraft der Haltekörper (73), versehen mit einer Handhabe (851), an dem Gehäusekörper (81) axial schiebebewegbar zur Freigabe des intermediären Haltemittels (75) gelagert ist.

8. Kupplung nach einem der Ansprüche 2 bis 7, **dadurch gekennzeichnet, dass** die beiden Kupplungsteile (2, 3) derart ausgebildet und eingerichtet sind, dass die Trennverriegelungsstelle (12) im Zustand der verriegelten Kupplungsverbindung von aus Mediumfluss im Strömungsweg der Kupplung (1) resultierenden Axialkräften frei ist, wobei das intermediäre Haltemittel (75) von dem Halterand (731) des Haltekörpers (73) mit einem axialen Freigabemaß (f) eingefasst ist, dessen Größe von den genannten resultierenden Axialkräften unbeeinflusst ist.

9. Kupplung nach einem der Ansprüche 1 bis 8, **dadurch gekennzeichnet, dass** zwischen den Verriegelungsschuhen (751) und den Verriegelungselementen (74) eine federelastische Schnappverbindung ausgebildet ist.

10. Kupplung nach einem der Ansprüche 1 bis 9, **dadurch gekennzeichnet, dass** das intermediäre Haltemittel (75) sich axial erstreckende Lamellen (752) aufweist, die jeweils an einem Fußende an dem Käfigkörper (71) festgelegt und radial ausweichlich angelenkt sind und am gegenüberliegenden Kopfende wenigstens einen auf wenigstens einem zugeordneten Verriegelungselement (74) aufsitzenden Verriegelungsschuh (751) aufweisen, der, vorzugsweise unter federelastischer Lamellen-Anlenkung, zusammen mit dem wenigstens einen Verriegelungselement (74) in den Ausweichraum (86) radial ausweichend ausgebildet ist.

11. Kupplung nach Anspruch 10, **dadurch gekennzeichnet, dass** die Lamellen (752) durch eine an dem Käfigkörper (71) angebrachte Lamellenhülse gebildet sind.

12. Kupplung nach einem der Ansprüche 1 bis 11, **dadurch gekennzeichnet, dass** die Verriegelungselemente (74) durch Kugeln gebildet sind.

13. Kupplung nach einem der Ansprüche 1 bis 12, **dadurch gekennzeichnet, dass** die Kupplungsteile (2, 3) Ventilmittel (4, 5) umfassen, die derart eingerichtet sind, dass sie an einer Trenn-Mediumübergangsstelle (11) gedichtet aneinandergrenzende Anschluss-Durchströmungsöffnungen (24, 34) im Kupplungsverbindungszustand öffnen bzw. im Kupplungstrennzustand schließen, wobei die Ventilmittel (4, 5) Ventil-Antriebsmittel (42, 52) und damit beaufschlagte Schließkörper (41, 51) umfassen, die im Kupplungsverbindungszustand mit konstant gehaltener axialer Kraft gegeneinander arbeiten und Bestandteile eines Schnelltrennmittels zur Nottrennung derart bilden, dass die Kupplungsteile (2, 3) beim Entriegeln der Kupplungsverbindung selbsttätig auseinander treiben, wobei die konstant gehaltene axiale Kraft zusammen mit auf die Kupplungsteile (2, 3) über gekuppelte Leitungen ausgeübter axialer Zugkraft an der Trennverriegelungsstelle (12) zur Nottrennung zu überwindende Haltekraft einer selbsttätigen Auslöseeinrichtung (801) der Löseeinrichtung (8) bestimmt.

14. Kupplung nach Anspruch 13, **dadurch gekennzeichnet, dass** die im Kupplungsverbindungszustand zwischen den gegeneinander arbeitenden Ventii-Schiießkönpem (41, 51) wirkende axiale Kraft **dadurch** konstant gehalten wird, dass an der Trenn-Mediumübergangsstelle (11) durch Strömung im Medium-Strömungsweg wirkende axiale Aktions- und Reaktionskräfte neutralisiert sind und dass sämtliche Elemente der Ventilmittel (4, 5) im Verbindungszustand der Kupplung (1) gänzlich außerhalb des Medium-Strömungswegs in Abdichtung gegenüber diesem vollständig frei von Durchflussmedium angeordnet sind.

## Claims

1. Quick-disconnect coupling (1) for connecting liquid or gaseous media-transporting lines in sealing relationship, comprising
a) two releasably connected coupling parts (2, 3) with female part (21) and male part (31) which form a medium flow path in the coupling (1) and which each extend axially in a straight coupling axis (10) between a coupling side and a line side,
b) a locking device (7) which keeps the two coupling parts (2, 3) in the releasable coupling connection and
c) a quick-release means, comprising the locking device (7) and a release device (8) co-operating therewith for separating the two coupling parts (2, 3) at a release locking site (12),
c1) wherein the locking device (7), which comprises a cage body (71) provided on the one (first) coupling part (2), a catch body (72) provided on the other (second) coupling part (3), a holding body (73), and locking elements (74) radially displaceable in the cage body (71) between catch position and release position, is designed in such a way that the locking elements (74) engage in the catch body (72) in a catch seat for locking the coupling connection at the release locking site (12), and are held in this catch position by means of the holding body (73), and
c2) wherein the release device (8), which comprises a holding device (801, 802), the holding body (73) and an escape space (86), is designed in such a way that the holding device (801, 802) secures and unlocks the locking, wherein it allows the locking elements to come away from the holding body (73) for unlocking, which locking elements, escaping into the escape space (86), thus move into their release position for unlocking the coupling connection,
d) an intermediary holding means (75) which is arranged and designed between the locking elements (74) and the holding body (73) in such a way that the holding body (73) holds the locking elements (74) indirectly by means of the intermediary holding means (75) in the catch position, wherein the intermediary holding means (75) is at least substantially only radially capable of escaping face to face with the locking elements (74), and the holding body (73) has a holding edge (731) which, for performing the indirect holding function, traps the intermediary holding means (75) in an axial direction and which traps the intermediary holding means (75) in planar relationship for locking and releases it for release of the locking by means of the holding device (801, 802),
**characterised in that**
the intermediary holding means (75) has locking shoes (751) which are seated on the locking elements (74) and which, together with the locking elements (74), are arranged and designed to escape radially into the escape space (86), **in that** the locking shoes (751) are designed with a seat surface which forms at least one linear abutment against the locking elements (74), and **in that** the locking shoes (751) abut against the locking elements (74) with radially directed elastic return force, wherein in their catch seat the locking elements (74) block axial relative movement between the cage body (71) and the catch body (72).

2. Coupling according to claim 1, **characterised in that** the holding body (73) and the intermediary holding means (75) are arranged so as to be axially displaceable relative to each other by means of the holding device (801, 802) for release of the locking system, in such a way that the intermediary holding means (75) comes away from the holding body (73) by the axial displacement with an axial clearance (f) which is determined by the holding edge (731), and so together with the locking elements (74) escapes radially into the escape space (86).

3. Coupling according to claim 2, **characterised in that** the intermediary holding means (75) is trapped in planar relationship by the holding edge (731) of the holding body (73) with only an axial clearance (f) which is smaller than the axial seat dimension (s) of a seat in which the intermediary holding means (75) is seated on the locking elements (74), wherein preferably the axial clearance (f) is smaller than half the axial seat dimension (s).

4. Coupling according to claim 2 or 3, **characterised in that** the holding device comprises an automatic releasing device (801) which has, connected between the first coupling part (2) and the cage body (71) a source of energy (83) which causes automatic unlocking for emergency release and which is designed with a predetermined holding force generated by the source of energy (83), such that the axial clearance displacement takes place with the clearance (f) determined by the holding edge (731) if and only if the predetermined holding force is overcome by an opposing releasing force occurring between the coupling parts in correlation with the clearance (f).

5. Coupling according to claim 4, **characterised in that** the source of energy (83) in its defined pre-stressed state has a force characteristic over the path, which, starting from a holding force which is constant when the path is zero and which is determined by the pre-stressing, at least runs flat within a path range corresponding to the clearance (f).

6. Coupling according to claim 4 or 5, **characterised in that** the source of energy (83) for emergency release is formed by at least one compression spring (831) with associated spring chamber (832) which receives it in an axial orientation and in which the compression spring (831) is pre-stressed to generate the holding force and which is preferably axially adjustable in length to adjust the holding force.

7. Coupling according to any of claims 2 to 6, **characterised in that** the holding device (8) comprises a manually operated releasing device (802) having a manually operated source of energy (84) which is mounted on a housing body (81) of the releasing device (802) and against the force of which the holding body (73), provided with a handle (851), is mounted on the housing body (81) so as to be axially slidable for release of the intermediary holding means (75).

8. Coupling according to any of claims 2 to 7, **characterised in that** the two coupling parts (2, 3) are constructed and designed in such a way that, in the locked state of the coupling connection, the release locking site (12) is free from axial forces resulting from medium flow in the flow path of the coupling (1), wherein the intermediary holding means (75) is trapped by the holding edge (731) of the holding body (73) with an axial clearance (f), the quantity of which is unaffected by the above resulting axial forces.

9. Coupling according to any of claims 1 to 8, **characterised in that** between the locking shoes (751) and the locking elements (74) is formed a resilient snap-fit connection.

10. Coupling according to any of claims 1 to 9, **characterised in that** the intermediary holding means (75) has axially extending lamellae (752) which are each fixed at a bottom end to the cage body (71) and hinged so as to be capable of escaping radially, and at the opposite top end have at least one locking shoe (751) which is seated on at least one associated locking element (74) and which, preferably with elastic spring hinging of the lamellae, together with the at least one locking element (74) is designed to be capable of escaping radially into the escape space (86).

11. Coupling according to claim 10, **characterised in that** the lamellae (752) are formed by a lamella sleeve mounted on the cage body (71).

12. Coupling according to any of claims 1 to 11, **characterised in that** the locking elements (74) are formed by balls.

13. Coupling according to any of claims 1 to 12, **characterised in that** the coupling parts (2, 3) comprise valve means (4, 5) which are designed to open and close connecting throughflow openings (24, 34) adjoining each other in sealed relationship at a releasable location (11) for passage of the medium, in the connected state and in the released state of the coupling respectively, wherein the valve means (4, 5) comprise valve drive means (42, 52) and closing bodies (41, 51) which are acted upon by the latter and which in the connected state of the coupling work against each other with an axial force which is kept constant and form components of a quick-release means for emergency separation, such that the coupling parts (2, 3) drift apart automatically when the coupling connection is unlocked, wherein the axial force which is kept constant together with an axial tensile force exerted on the coupling parts (2, 3) via coupled lines at the release locking site (12) determines the holding force of an automatic releasing device (801) of the release device (8) to be overcome for emergency release.

14. Coupling according to claim 13, **characterised in that** the axial force, which in the connected state of the coupling acts between the valve closing bodies (41, 51) that work against each other, is kept constant **in that** axial action and reaction forces acting at the releasable location (11) for passage of the medium by flow in the medium flow path are neutralised and **in that** all elements of the valve means (4, 5) in the connected state of the coupling (1) are arranged entirely outside the medium flow path, sealed off from the latter and completely free from throughflow medium.

## Revendications

1. Raccord à coupure rapide (1) pour la liaison étanche de conduites de transport de fluides gazeux ou liquides, ledit raccord comportant
a) deux pièces de raccord (2, 3), une pièce femelle (21) et une pièce mâle (31), qui sont reliées de façon séparable, qui réalisent un chemin d'écoulement de fluide dans le raccord (1) et qui s'étendent axialement suivant un axe de raccord rectiligne (10) entre un côté raccord et un côté conduite,
b) un dispositif de verrouillage (7) maintenant les deux pièces de raccord (2, 3) dans la liaison de raccord séparable et
c) un moyen de coupure rapide comportant le dispositif de verrouillage (7) et un dispositif de déblocage (8) coopérant avec ledit dispositif de verrouillage pour séparer les deux pièces de raccord (2, 3) à un emplacement de verrouillage séparable (12),
c1) le dispositif de verrouillage (7), qui comporte un corps à cage (71) prévu au niveau de l'une (première) des pièces de raccord (2), un corps de blocage (72) prévu au niveau de l'autre (seconde) des pièces de raccord (3), un corps de retenue (73) ainsi que des éléments de verrouillage (74) pouvant être monté radialement dans le corps à cage (71) entre une position de blocage et une position de déblocage, étant conçu de telle sorte que les éléments de verrouillage (74) sont montés dans le corps de blocage (72) afin de verrouiller la liaison de raccord à l'emplacement de verrouillage séparable (12) dans le siège de blocage et sont maintenus dans cette position de blocage au moyen du corps de retenue (73), et
c2) le dispositif de déblocage (8), qui comporte un dispositif de retenue (801, 802), le corps de retenue (73) et un espace de déviation (86), étant conçu de telle sorte que le dispositif de retenue (801, 802) assure et supprime le verrouillage, ledit dispositif de déblocage permettant le passage des éléments de verrouillage pour supprimer le verrouillage par rapport au corps de retenue (73), lesquels éléments de verrouillage parviennent ainsi dans leur position de déblocage, en étant dévié dans l'espace de déviation (86), afin de déverrouiller la liaison de raccord,
d) un moyen de retenue intermédiaire (75), qui est disposé entre les éléments de verrouillage (74) et le corps de retenue (73) et qui est conçu de telle sorte que le corps de retenue (73) maintient les éléments de verrouillage (74) dans la position de blocage par le biais du moyen de retenue intermédiaire (75), le moyen de retenue intermédiaire (75) ne pouvant être dévié sensiblement que radialement par rapport aux éléments de verrouillage (74) et le corps de retenue (73) comportant, afin de jouer le rôle de retenue indirect, un bord de retenue (731) qui introduit le moyen de retenue intermédiaire (75) dans une direction axiale, à plat pour effectuer le déverrouillage, et libère celui-ci pour débloquer le verrouillage au moyen du dispositif de retenue (801, 802),
**caractérisé en ce que**
le moyen de retenue intermédiaire (75) comporte des patins de verrouillage (751), siégeant sur les éléments de verrouillage (74), qui sont disposés et conformés de façon à être déviés radialement dans l'espace de déviation (86) conjointement avec les éléments de verrouillage (74), **en ce que** les patins de verrouillage (751) sont conformés avec une surface de siège qui réalise au moins un circuit linéaire sur les éléments de verrouillage (74), et **en ce que** les patins de verrouillage (751) portent contre les éléments de verrouillage (74) avec une force de rappel élastique dirigée radialement, les éléments de verrouillage (74) bloquant dans leur position de blocage tout mouvement relatif axial entre le corps à cage (71) et le corps de blocage (72).

2. Raccord selon la revendication 1, **caractérisé en ce que** le corps de retenue (73) et le moyen de retenue intermédiaire (75) sont disposés de façon à pouvoir se déplacer axialement l'un par rapport à l'autre afin de débloquer le verrouillage au moyen du dispositif de retenue (801, 802), **en ce que** le moyen de retenue intermédiaire (75) est libéré du corps de retenue (73) en se déplaçant axialement avec un dégagement axial qui est défini par le bord de retenue (731), et est ainsi dévié radialement dans l'espace de déviation (86) conjointement avec les éléments de verrouillage (74).

3. Raccord selon la revendication 2, **caractérisé en ce que** le moyen de retenue intermédiaire (75) est introduit à plat par le bord de retenue (731) du corps de retenue (73) avec seulement un dégagement axial (f) qui est inférieur à la dimension axiale (s) d'un siège dans lequel le moyen de retenue intermédiaire (75) siège sur les éléments de verrouillage (74), le dégagement axial (f) étant de préférence inférieur à la moitié de la dimension axiale (s) du siège.

4. Raccord selon la revendication 2 ou 3, **caractérisé en ce que** le dispositif de retenue comporte un dispositif de déclenchement automatique (801) qui comporte pour la coupure d'urgence une source d'énergie mécanique (83) montée entre la première pièce de raccord (2) et le corps à cage (71) et réalisant un déverrouillage automatique, laquelle source d'énergie mécanique est conçue avec une force de retenue prescrite, qu'elle génère, de sorte que le déplacement de dégagement axial est effectué avec le dégagement (f) défini par le bord de retenue (731) si et seulement si la force de retenue prescrite est surmontée par une force de déclenchement, qui lui est opposée et qui apparaît entre les pièces de raccord, en corrélation avec le dégagement (f).

5. Raccord selon la revendication 4, **caractérisé en ce que** la source d'énergie mécanique (83) présente dans son état précontraint défini une dynamique en fonction du chemin qui s'étend à plat, en tout cas dans une région de chemin correspondant au dégagement (f), en partant d'une force de retenue définie par la précontrainte et constante avec la dimension du chemin.

6. Raccord selon la revendication 4 ou 5, **caractérisé en ce que** la source d'énergie mécanique de coupure d'urgence (83) est formée par au moins un ressort de compression (831) auquel est associé un espace de ressort (832) dans lequel il est logé avec une orientation axiale et dans lequel le ressort de compression (831) est précontraint en générant la force de retenue et qui peut régler longitudinalement et axialement de préférence en régler la force de retenue.

7. Raccord selon l'une des revendications 2 à 6, **caractérisé en ce que** le dispositif de retenue (8) comporte un dispositif de déclenchement (802) actionnable manuellement qui comporte une source d'énergie mécanique (84) actionnable manuellement et montée sur un corps de boîtier (81) du dispositif de déclenchement (802), le corps de retenue (73), doté d'une manette (851), étant monté sur le corps de boîtier (81) de façon à pouvoir coulisser axialement pour libérer le moyen de retenue intermédiaire (75) en s'opposant à la force générée par ladite source d'énergie mécanique.

8. Raccord selon l'une des revendications 2 à 7, **caractérisé en ce que** les deux pièces mécaniques (2, 3) sont conformées et conçues de telle sorte que l'emplacement de verrouillage séparable (12) est dépourvu, lorsque la liaison de raccord est verrouillée, de forces axiales résultant de l'écoulement de fluide dans la chemin d'écoulement du raccord (1), le moyen de retenue intermédiaire (75) étant introduit par le bord de retenue (731) du corps de retenue (73) avec un dégagement axial (f) dont la dimension n'est pas influencée par lesdites forces axiales résultantes.

9. Raccord selon l'une des revendications 1 à 8, **caractérisé en ce qu'**une liaison par encliquetage élastique est formée entre les patins de verrouillage (751) et les éléments de verrouillage (74).

10. Raccord selon l'une des revendications 1 à 9, **caractérisé en ce que** le moyen de retenue intermédiaire (75) comporte des lamelles (752), s'étendant axialement, qui sont fixées chacune à une extrémité de pied au corps à cage (71) et qui sont articulées de façon à être déviées radialement et qui comportent à l'extrémité de tête opposée un patin de verrouillage (751) qui siège sur au moins un élément de verrouillage associé (74) et qui est conformé, de préférence sous l'effet de l'articulation élastique des lamelles, de façon à être dévié radialement dans l'espace de déviation (86) conjointement avec l'au moins un élément de verrouillage (74).

11. Raccord selon la revendication 10, **caractérisé en ce que** les lamelles (752) sont formées par un manchon de lamelle monté sur le corps à cage (71).

12. Raccord selon l'une des revendications 1 à 11, **caractérisé en ce que** les éléments de verrouillage (74) sont formés par des billes.

13. Raccord selon l'une des revendications 1 à 12, **caractérisé en ce que** les pièces de couplage (2, 3) comportent des moyens formant un clapet (4, 5) à un emplacement de répartition de fluide (11), qui sont conçus de façon à ouvrir des ouvertures de passage et de raccordement (24, 34), adjacentes de façon étanche, lorsque la liaison de raccord est établie et à les fermer lorsque la liaison de raccord est coupée, les moyens formant clapets (4, 5) comportant des moyens d'entraînement de clapet (42, 52) et des corps de fermeture (41, 51) sollicités par ceux-ci qui fonctionnent de façon antagoniste avec une force axialement constante lorsque la liaison de raccord est établie et qui font partie d'un moyen de coupure rapide pour la coupure d'urgence de sorte que les pièces de raccord (2, 3) s'écartent automatiquement l'une de l'autre lorsque la liaison de raccord est débloquée, la force axiale constante définissant, conjointement avec une force de traction axiale exercée sur les pièces de raccord (2, 3) par le biais de conduites raccordées, à l'emplacement de verrouillage séparable (12), une force de retenue, à surmonter en cas de coupure d'urgence, d'un dispositif de déclenchement automatique (801) du dispositif de déblocage (8).

14. Raccord selon la revendication 13, **caractérisé en ce que** la force axiale qui agit, lorsque la liaison de raccord est établie, entre les corps de fermeture de clapet (41, 51) fonctionnant de façon antagoniste, est maintenue constante en neutralisant des forces d'action et de réaction axiales agissant par écoulement dans le chemin d'écoulement de fluide à l'emplacement de répartition de fluide (11) et en disposant tous les éléments des moyens formant clapet (4, 5), lorsque la liaison du raccord (1) est établie totalement à l'extérieur du chemin d'écoulement de fluide de façon étanche par rapport à celui-ci, et ce sans aucun fluide d'écoulement.
